(19) Europäisches Patentamt
European Patent Office
Office européen des brevets

(11) Veröffentlichungsnummer: **0 291 848 B1**

(12) **EUROPÄISCHE PATENTSCHRIFT**

(45) Veröffentlichungstag der Patentschrift: **07.04.93**

(51) Int. Cl.5: **G11B 7/24**

(21) Anmeldenummer: **88107588.1**

(22) Anmeldetag: **11.05.88**

# (54) Optisches Aufzeichnungsmedium, das eine Reflektorschicht aufweist, die ein Silicium-Phthalocyaninderivat enthält.

(30) Priorität: **19.05.87 DE 3716734**

(43) Veröffentlichungstag der Anmeldung:
**23.11.88 Patentblatt 88/47**

(45) Bekanntmachung des Hinweises auf die Patenterteilung:
**07.04.93 Patentblatt 93/14**

(84) Benannte Vertragsstaaten:
**CH DE FR GB IT LI NL SE**

(56) Entgegenhaltungen:
**EP-A- 0 203 826**
**EP-A- 0 213 923**

(73) Patentinhaber: **BASF Aktiengesellschaft**
**Carl-Bosch-Strasse 38**
**W-6700 Ludwigshafen(DE)**

(72) Erfinder: **Albert, Bernhard, Dr.**
**Rietburgstr. 13**
**W-6701 Maxdorf(DE)**
Erfinder: **Hauser, Peter, Dr.**
**Saarstr. 2**
**W-6703 Limburgerhof(DE)**
Erfinder: **Acker, Michael, Dr.**
**Kettelerstr. 16a**
**W-6148 Heppenheim(DE)**
Erfinder: **Schrott, Wolfgang, Dr.**
**Bruesseler Ring 45**
**W-6700 Ludwigshafen(DE)**
Erfinder: **Wagenblast, Gerhard, Dr.**
**Hanns-Fay-Str. 3**
**W-6710 Frankenthal(DE)**

EP 0 291 848 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.5x/3.0.1)

## Beschreibung

Die vorliegende Erfindung betrifft ein neues optisches Aufzeichnungsmedium, enthaltend eine gegenüber Laserlicht empfindliche, Farbstoffe enthaltende Schicht sowie eine Reflektorschicht, die ein Silicium-Phthalocyaninderivat enthält.

Aufzeichnungsmaterialien, die mit Strahlen hoher Energiedichte, beispielsweise Laserlicht, eine lokal begrenzte Zustandsänderung erfahren, sind bekannt. Mit einer solchen thermisch ausgelösten Zustandsänderung, wie Verdampfen, Änderung des Fließverhaltens oder Ausbleichen, ist eine Änderung der optischen Eigenschaften, z.B. der Absorption durch Änderung des Absorptionsmaximums oder der Extinktion verbunden, welche zur Informations- oder Datenaufzeichnung ausgenutzt werden kann.

Die bekannten Informationsaufzeichnungsmaterialien bestehen beispielsweise aus einem transparenten Träger, auf den dünne Schichten von organischen Verbindungen, z.B. IR-Farbstoffe aufgebracht sind. In vielen Fällen weisen sie zusätzlich noch eine metallische Reflektorschicht auf. Die dünnen Schichten werden beispielsweise durch Aufdampfen im Vakuum oder Aufschleudern erzeugt.

So ist beispielsweise aus der US-A-4 079 895 ein Aufzeichnungsmedium bekannt, das eine Schicht aus einem lichtreflektierenden Material (Aluminium oder Gold) aufweist, welche mit einer lichtabsorbierenden Schicht, die Fluorescein enthält, bedeckt ist.

Bei Systemen dieser Art wirkt sich aber die hohe Wärmeleitfähigkeit der metallischen Reflektorschicht nachteilig aus. Außerdem besteht bei vielen anorganischen Materialien Korrosionsgefahr.

Bei Belichtung durch den transparenten Träger hindurch erfolgt die Markierung (Zustandsänderung) im allgemeinen durch Blasenbildung, was sich auf die mechanische Stabilität der Reflektorschicht nachteilig auswirken kann.

Allerdings dürfen Monolayersysteme mit hochreflektierenden Farb-stoffschichten, die keinen metallischen Reflektor benötigen, entweder überhaupt kein oder aber nur wenig Bindemittel neben dem Farbstoff enthalten, da sonst ihr Reflektionsverhalten unbefriedigend wird.

Andererseits kann bei bestimmten Farbstoffklassen ein zu geringer Bindemittelgehalt die Gefahr einer Kristallisation der Aufzeichnungsschicht zur Folge haben. Diese wird dadurch unbrauchbar.

Aufgabe der vorliegenden Erfindung war es, ein optisches Aufzeichnungsmedium mit Reflektorschicht und Farbstoffschicht, die gegebenenfalls ein Bindemittel aufweist, bereitzustellen, wobei das Aufzeichnungsmedium eine hohe Grundreflexion sowie eine erhöhte Lagerstabilität aufweisen und empfindlich beschreibbar sein sollte.

Es wurde nun ein Aufzeichnungsmedium gefunden, enthaltend einen transparenten Träger, eine gegenüber Laserlicht empfindliche, Farbstoff enthaltende Schicht sowie eine Reflektorschicht, die Silicium-Phthalocyaninderivat der Formel I

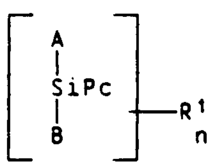

(I)

enthält, in der $R^1$ an den Phthalocyaninrest gebunden ist, und in der

$R^1$ Wasserstoff, $C_1$-$C_{12}$-Alkyl, $C_1$-$C_{12}$-Alkoxy, Halogen oder den Rest

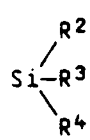

,

in dem $R^2$, $R^3$ und $R^4$ gleich oder verschieden sind und unabhängig voneinander jeweils für $C_1$-$C_5$-Alkyl stehen,

n die Zahl 1, 2, 3 oder 4 und

A und B gleich oder verschieden sind und unabhängig voneinander jeweils $C_1$-$C_{12}$-Alkyl, Halogen oder den Rest $OR^5$ bedeuten, wobei $R^5$ für $C_1$-$C_{12}$-Alkyl, das gegebenenfalls durch ein oder mehrere Sauerstoffatome oder $C_1$-$C_4$-Alkyliminogruppen unterbrochen und/oder durch einen

fünf- oder sechsgliedrigen gesättigten heterocyclischen Rest substituiert ist, oder für den Rest

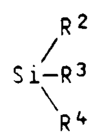 ,

in dem $R^2$, $R^3$ und $R^4$ jeweils die obengenannte Bedeutung besitzen, steht.

Alle in der obengenannten Formel I auftretenden Alkylreste können sowohl geradkettig als auch verzweigt sein.

Für den Fall, daß $R^5$ für $C_1$-$C_{12}$-Alkyl steht, das durch einen fünf- oder sechsgliedrigen gesättigten heterocyclischen Ring substituiert ist, kommen als solche Substituenten z.B. Pyrrolidino, Piperidino, Morpholino, Piperazino oder N-($C_1$-$C_4$-Alkyl)piperazino, wie N-Methyl- oder N-Ethylpiperazin in Betracht.

$R^1$, $R^2$, $R^3$, $R^4$, $R^5$, A und B in Formel I stehen beispielsweise für Methyl, Ethyl, Propyl, Isopropyl, Butyl, Isobutyl, sec-Butyl, tert-Butyl, Pentyl, Isopentyl, sec-Pentyl oder tert-Pentyl.

$R^1$, $R^5$, A und B in Formel I stehen weiterhin beispielsweise für Hexyl, 2-Methylpentyl, Heptyl, Octyl, 2-Ethylhexyl, Isooctyl, Nonyl, Isononyl, Decyl, Isodecyl, Undecyl oder Dodecyl (die Bezeichnungen Isooctyl, Isononyl und Isodecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436).

$R^1$, A und B in Formel I stehen weiterhin beispielsweise für Fluor, Chlor, Brom, Methoxy, Ethoxy, Propoxy, Isopropoxy, Butoxy, Isobutoxy, sec-Butoxy, Pentyloxy, Isopentyloxy, sec-Pentyloxy, Hexyloxy, 2-Methylpentyloxy, Heptyloxy, Octyloxy, 2-Ethylhexyloxy, Isooctyloxy, Nonyloxy, Isononyloxy, Decyloxy, Isodecyloxy, Undecyloxy oder Dodecyloxy.

A und B in Formel I stehen weiterhin beispielsweise für 2-Methoxyethoxy, 2-Ethoxyethoxy, 2- oder 3-Ethoxypropoxy, 3,6-Dioxaheptyloxy, 3,6-Dioxaoctyloxy,3,6,9-Trioxadecyloxy, 2-Dimethylaminoethoxy, 2-Diethylaminoethoxy, 2-Dipropylaminoethoxy, 2-Diisopropylaminoethoxy, 2-Dibutylaminoethoxy, 5-Dimethylamino-3-oxapentyloxy, 2-Dimethylaminopropoxy, 3-Dimethylaminopropoxy, 3-Dimethylaminoprop-2-oxy, 4-Dimethylaminobutoxy, 3-Dimethylamino-2,2-dimethylpropoxy, 6-Dimethylaminohexyloxy, 2-Pyrrolidinoethoxy, 2-Piperidinoethoxy, 2-Morpholinoethoxy, 2-Piperazinoethoxy, 2-(N-Methylpiperidino)ethoxy oder 3-(N-Ethylpiperidino)propoxy.

$R^1$ und $R^5$ in Formel I bedeuten weiterhin beispielsweise Trimethylsilyl, Triethylsilyl, Tripropylsilyl, Tributylsilyl, Dimethyl-ethylsilyl oder Methyl-diethylsilyl.

Bevorzugt sind solche optische Aufzeichnungsmedien, die ein Phthalocyaninderivat der Formel I enthalten, in der $R^1$ Wasserstoff, $C_2$-$C_6$-Alkyl, $C_1$-$C_8$-Alkoxy, Fluor, Chlor oder Trimethylsilyl, n die Zahl 4 und A und B unabhängig voneinander $C_1$-$C_8$-Alkyl, Fluor, Chlor oder den Rest $OR^5$ bedeuten, wobei $R^5$ für $C_1$-$C_8$-Alkyl, das gegebenenfalls durch ein oder mehrere Sauerstoffatome oder $C_1$-$C_4$-Alkyliminogruppen unterbrochen und/oder durch einen fünf- oder sechsgliedrigen gesättigten heterocyclischen Rest substituiert ist, steht.

Für den Fall, daß $R^5$ für $C_1$-$C_8$-Alkyl steht, das durch ein oder mehrere Sauerstoffatome oder $C_1$-$C_4$-Alkyliminogruppen unterbrochen ist, sind solche Komponenten bevorzugt, bei denen dieser Rest $R^5$ durch ein oder zwei Sauerstoffatome oder $C_1$-$C_4$-Alkyliminogruppen unterbrochen ist.

Die Silicium-Phthalocyaninderivate der Formel I sind teilweise bekannt und beispielsweise in F.H. Moser, A.L. Thomas "The Phthalocyanines", CRC Press, Boca Rota, Florida, 1983, beschrieben oder können nach an sich bekannten Methoden, wie sie dort beschrieben sind, hergestellt werden.

Als Ausgangsprodukte dienen die entsprechenden Phthaloderivate. Beispielsweise seien die Dinitrile (II) oder Diiminoisoindoline (III) genannt, wobei $R^1$ jeweils die obengenannte Bedeutung besitzt.

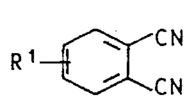

II

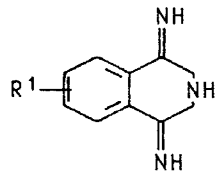

III

Dichlorsilicium-Phthalocyanin kann z.B. nach der Methode, wie sie aus J. Am. Chem. Soc. Band 105, S. 1539 (1983) bekannt ist, hergestellt werden. Substituierte Derivate können in analoger Weise hergestellt werden. Bei ihrer Aufarbeitung kann Chloroform durch Methanol ersetzt werden.

Der Austausch von Chlor gegen Alkoxyreste am Silicium-Zentralatom erfolgt beispielsweise in Pyridin in Gegenwart von überschüssigem Triethylamin. Als Reaktionspartner dient dabei jeweils der betreffende Alkohol.

Der Einbau von Fluor erfolgt, ausgehend von den entsprechenden Hydroxyderivaten, mit wasserfreiem Fluorwasserstoff. Verglichen mit der aus Inorganic Chemistry Band 5, S. 1979 (1966) bekannten Methode, die mit Flußsäure arbeitet, verläuft die Umsetzung mit wasserfreiem Fluorwasserstoff glatter.

Unsymmetrisch substituierte Phthalocyaninderivate können z.B. nach folgendem Reaktionsschema erhalten werden.

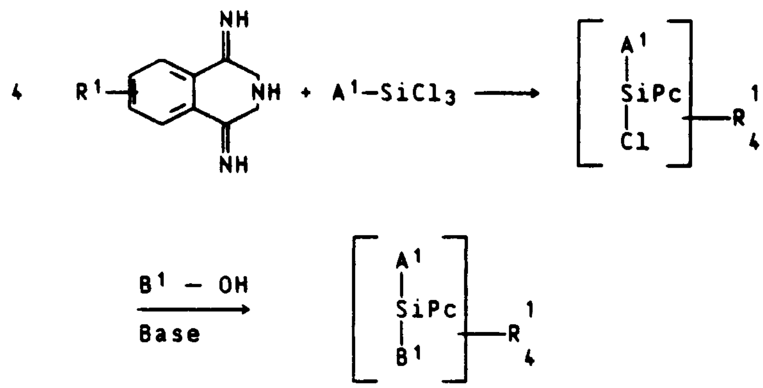


Im obigen Schema besitzt $R^1$ die obengenannte Bedeutung, $A^1$ und $B^1$ stehen z.B. für $C_1$-$C_{12}$-Alkyl. Die Umsetzung erfolgt dabei nach der aus Inorganic Chemistry 5, 1979 (1966), bekannten Methode.

Der Aufbau der Aufzeichnungsmedien ist an sich bekannt.

Als transparente Träger kommen z.B. Glasplatten oder -scheiben oder Kunststoffplatten oder -scheiben, insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder einer runden Scheibe haben, wobei die für laseroptische Aufzeichnungsmaterialien üblichen und bekannten Scheiben eines Durchmessers von 10 oder 13 cm bevorzugt werden. Es können auch Träger in vorgerillter Form verwendet werden, um auf diese Weise eine Spurführung und schnellen Datenzugriff zu ermöglichen.

Als Farbstoffe, die in der gegenüber Laserlicht empfindlichen Schicht enthalten sind, kommen alle Verbindungen in Betracht, die bei der Wellenlänge des verwendeten Laserlichtes (ca. 700 bis 900 nm) eine ausreichende Absorption aufweisen. Im Falle der Halbleiterlaser sind dies beispielsweise Phthalocyanine (EP-A-84 729, US-A-4 458 004), Dithiolenkomplexe (DE-A-3 505 751, US-A-4 320 489), Chrom-, Kobalt- oder Mangan-Komplexe mit Dihydroxyazoliganden (JP-A-11385/1985). Methinfarbstoffe (US 4 460 665), Indigoderivate, Anthrachinone (JP-A-118 492/1986), Naphthochinone (EP-A-97929) oder Trichinoncyclopropane (DE-A-3 507 379).

Die gegenüber Laserlicht empfindliche Schicht kann als weitere Komponente Polymerisate enthalten, die mit den Farbstoffen verträglich sind. Solche Polymerisate werden im allgemeinen als Bindemittel bezeichnet. Beispiele geeigneter Bindemittel sind Polystyrole, Polyester, Polyacrylate, Polymethacrylate, Polycarbonate, Polyamine, Polyvinylalkohole, Polyvinylchloride, Copolymere von Vinylchlorid und Vinylacetat oder flüssigkristalline Seitengruppen enthaltende Polymerisate oder Copolymerisate gemäß der EP-A-90

282 oder EP-A-171 045.

Bevorzugt sind solche optische Aufzeichnungsmedien, bei denen die Farbstoffschicht zusätzlich ein Bindemittel aufweist. Der Farbstoffgehalt in der Schicht beträgt dabei 35 bis 85 Gew.-%, bezogen auf das Gewicht der Schicht. Die restlichen 65 bis 15 Gew.-% verteilen sich dabei auf Bindemittel und gegebenenfalls weitere Zusatzstoffe.

Als weitere geeignete Zusatzstoffe können die Filme beispielsweise niedermolekulare flüssigkristalline Verbindungen enthalten.

Das Aufbringen der einzelnen Schichten (Farbstoffschicht und Reflektorschicht) auf den Träger kann in beliebiger Reihenfolge geschehen. Bevorzugt ist ein optisches Aufzeichnungsmedium bei dem die ein Silicium-Phthalocyaninderivat der Formel I enthaltende Reflektorschicht sich zwischen Träger und der Farbstoff enthaltenden Schicht befindet.

Zweckmäßig geht man bei der Herstellung des erfindungsgemäßen optischen Aufzeichnungsmediums so vor, daß man die Silicium-Phthalocyaninderivate der Formel I unter vermindertem Druck ($10^{-7}$ bar bis $10^{-4}$ bar) bei einer Temperatur von 100 bis 400 °C auf das Trägermaterial aufdampft. Es ist aber auch möglich, eine Lösung der Silicium-Phthalocyanine I in einem geeigneten Lösungsmittel aufzuschleudern. Auf diese Reflektorschicht wird dann die Farbstoffschicht gebracht.

Die Farbstoffe können unter vermindertem Druck auf die Reflektorschicht aufgedampft werden. Vorzugsweise wird aber eine Lösung der betreffenden Farbstoffe, die vorzugsweise noch Bindemittel und gegebenfalls noch andere Hilfsmittel, wie Antioxidantien, die die Stabilität der Farbstoffe erhöhen, enthält, direkt auf die Reflektorschicht geschleudert (Spincoating). Es ist aber auch möglich den Farbstoff aufzurakeln.

Wegen der großen Chemoresistenz der auf dem Träger befindlichen Reflektorschicht können alle Lösungsmittel verwendet werden, in denen sich die Farbstoffe, Bindemittel und gegebenenfalls die weiteren Hilfsmittel gut lösen und welche ein zur Erzeugung homogener Schichten optimales Verdunstungsverhalten zeigen. Beispielhaft seien folgende Lösungsmittel genannt, Bromoform, Ethanol, Methylethylketon, Toluol, 1,1,1- oder 1,1,2-Trichlorethan oder Xylol. Dabei wirkt die Reflektorschicht als Schutzschicht gegenüber dem Träger. Das gilt insbesonders für aufgedampfte Silicium-Phthalocyaninschichten.

Bei aufgeschleuderten Silicium-Phthalocyaninschichten wählt man zum Aufbringen der Farbstoff enthaltenden Absorberschicht ein solches Lösungsmittel, in dem sich das Silicium-Phthalocyaninderivat nicht löst.

Beispielsweise schleudert man die Reflektorschicht mit polycarbonatverträglichen Alkoholen auf den Träger. Daran anschließend schleudert man dann die Absorberschicht, gelöst in Toluol, auf.

Die erfindungsgemäßen optischen Aufzeichnungsmedien zeichnen sich durch vielerlei vorteilhafte Eigenschaften aus. So weisen sie eine wesentlich höhere Grundreflektivität (20 bis 50 %) auf. Dies wiederum wirkt sich vorteilhaft auf die Fokussierung des Laserlichtstrahls aus. Es erlaubt weiterhin eine bessere Spurführung bei Trägern mit Spurrillen. Auch der Kontrast und das Signal:Rausch-Verhältnis wird dadurch entscheidend verbessert. Außerdem können auf diese Weise schwächer absorbierende IR-Farbstoffe verwendet werden, was bei den bekannten optischen Aufzeichnungsmedien nicht ohne weiteres möglich ist.

Weiterhin wirkt sich bei den neuen optischen Aufzeichnungsmedien der Einfluß von Morphologieänderungen der Farbstoff enthaltenden Schicht, sowohl bei unbeschriebenen als auch bei beschriebenen Systemen, weit weniger schädlich aus als bei bestimmten Systemen des Standes der Technik, bei denen ein zu geringer Bindemittelgehalt die Gefahr der Kristallisation der Aufzeichnungsschicht zur Folge haben kann.

Durch den sandwichartigen Aufbau (Träger/Silicium-Phthalocyaninreflektor/Farbstoffschicht) wird die gegenüber Laserlicht empfindliche Schicht in vorteilhafter Weise vor sichtbarem Licht und UV-Strahlung geschützt, was sich sehr günstig auf die Lichtstabilität der neuen Systeme auswirkt.

Schließlich kann beim erfindungsgemäßen optischen Aufzeichnungsmedium nach dem Beschreiben die gespeicherte Information selbst dann gelesen werden, wenn der IR-Farbstoff in der Absorberschicht ausbleicht, was beispielsweise durch Dauerlesen geschehen kann.

Auf die Vorteile bei der Herstellung der neuen Systeme, die sich durch die große Chemoresistenz der Reflektorschicht ergibt, wurde bereits oben hingewiesen.

Die folgenden Beispiele sollen die Erfindung näher erläutern.

A) Herstellung der Silicium-Phthalocyanine

Die folgenden Herstellbeispiele stehen repräsentativ für die Herstellung aller Silicium-Phthalocyanine der Formel I.

a) Synthese von

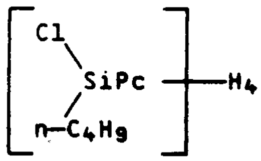

20 g n-Butyltrichlorsilan und 11 g 1,3-Diiminoisoindolin wurden in 150 ml Chinolin 2 Std. auf 190 °C erhitzt. Nach dem Abkühlen gab man 200 ml Methanol zu, saugte ab und wusch mit Methanol.

b) Synthese von

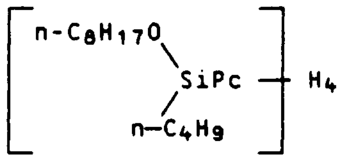

5 g der unter a) beschriebenen Verbindung wurden in 100 ml Pyridin vorgelegt. Dann wurden 5 ml Triethylamin und 3 ml n-Octanol zugegeben und 6 Std. bei 70 °C gerührt. Nach dem Abkühlen wurde auf Wasser gegossen, abgesaugt und mit Wasser gewaschen. Das Rohprodukt wurde mit Toluol/Methylenchlorid (v/v 1:1) über neutrales Aluminiumoxid chromatographiert.

c) Synthese von

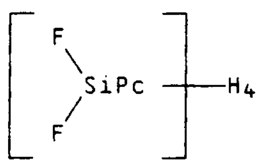

5 g Dihydroxysilicium-Phthalocyanin wurden sehr fein pulverisiert und dann mit 60 ml wasserfreiem Fluorwasserstoff 6 Std. bei Raumtemperatur gerührt, wobei am absteigenden Kühler alle flüchtigen Bestandteile abdestillieren. Es blieb reines Difluorsilicium-Phthalocyanin zurück.

B) Herstellung des optischen Aufzeichnungsmediums

Eine rotierende Scheibe (Durchmesser 12 cm) aus Polymethylmethacrylat wurde bei einer Drehzahl von 200 U/min unter vermindertem Druck ($10^{-5}$ bar) aus einem heizbaren Tantalschiffchen langsam mit einem der Silicium-Phthalocyaninderivate P1-P3 (vgl. Tabelle 3) bedampft, bis eine Schichtdicke von ca. 50 nm erreicht war. Im Falle der Silicium-Phthalocyanine P4-P9 wurde die Reflektorschicht aufgeschleudert. Die Reflektivität bei einer Wellenlänge von 800 nm betrug Re1.

0,5 g Farbstoff F und 0,5 g Bindemittel B wurden in 20 ml Lösungsmittel L bei Raumtemperatur über Nacht gerührt und danach mittels Überdruck durch eine Fritte (P4) gepreßt. Die resultierende Lösung wurde dann mittels einer Spritze auf die Silicium-Phthalocyaninschicht der oben beschriebenen Scheibe, die sich in Rotation befand, aufgetragen. Die Lösung wurde dabei bei einer Drehzahl von 2000 U/min 25 sec lang abgeschleudert und anschließend 35 sec bei einer Drehzahl von 5000 U/min trockengeschleudert. Die erhaltene Schicht war homogen, pin-hole-frei und hochreflektierend. Durch das Substrat wurde eine Reflektivität Re2 beobachtet.

In der folgenden Tabelle 1 sind jeweils Silicium-Phthalocyaninderivat P der Reflektorschicht, die gemessenen Reflektivitäten Re1 und Re2 sowie Lösungsmittel L, Bindemittel B, Farbstoff F und Gewichtsverhältnis Farbstoff : Bindemittel angegeben.

In Tabelle 2 finden sich die chemischen Strukturformeln der jeweils verwendeten Farbstoffe F und in Tabelle 3 die der jeweils verwendeten Silicium-Phthalocyanine.

Bei den Bindemitteln gelten folgende Abkürzungen:

PS: Polystyrol
MMA/MAS: Methylmethacrylat/Methylacrylsäure
PMMA: Polymethylmethacrylat
SAN: Styrol-Acrylnitril-Copolymer

Tabelle 1

| Bsp.Nr. | P | Re1 [%] | F | B | F : B | L | Re2 [%] |
|---|---|---|---|---|---|---|---|
| 1 | P1 | 50 | F1 | PS | 50:50 | Toluol | 23 |
| 2 | P1 | 50 | F2 | MMA/MAS | 50:50 | Essigester | 27 |
| 3 | P1 | 50 | F6 | PMMA | 50:50 | Chloroform | 30 |
| 4 | P1 | 50 | F7 | SAN | 50:50 | 1,1,2-Trichlorethan | 25 |
| 5 | P1 | 50 | F9 | MMA/MAS | 50:50 | 1,1,2-Trichlorethan | 26 |
| 6 | P3 | 48 | F3 | PS | 50:50 | Toluol | 23 |
| 7 | P2 | 45 | F7 | SAN | 50:50 | 1,1,2-Trichlorethan | 27 |
| 8 | P3 | 48 | F4 | PS | 50:50 | Toluol | 23 |
| 9 | P2 | 45 | F5 | PMMA | 50:50 | 1,1,2-Trichlorethan | 28 |
| 10 | P4 | 35 | F2 | MMA/MAS | 50:50 | Essigester | 20 |
| 11 | P5 | 32 | F8 | MMA/MAS | 50:50 | Methylglykol | 20 |
| 12 | P6 | 34 | F8 | MMA/MAS | 50:50 | Methylglykol | 22 |
| 13 | P7 | 30 | F1 | PS | 50:50 | Toluol | 18 |
| 14 | P8 | 34 | F9 | MMA/MAS | 50:50 | Methylglykol | 22 |
| 15 | P9 | 32 | F8 | MMA/MAS | 50:50 | Methylglykol | 21 |
| 16 | P7 | 30 | F7 | SAN | 50:50 | 1,1,2-Trichlorethan | 20 |
| 17 | P7 | 30 | F2 | PS | 50:50 | Toluol | 22 |

Tabelle 2

a)

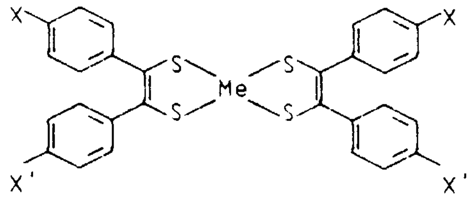

(bekannt aus DE-A-3 505 751)

| | X | X' | Me |
|---|---|---|---|
| F1 | F | n-$C_8H_{17}$ | Pt |
| F2 | F | n-$C_5H_{11}$ | Pt |
| F3 | F | n-$C_8H_{17}$ | Ni |
| F4 | F | n-$C_5H_{11}$ | Ni |

b)

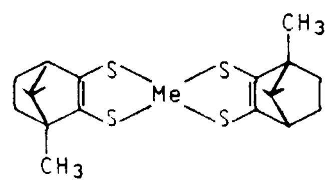

(bekannt aus DE-A-3 505 750)

| | |
|---|---|
| F5 | Me = Ni |
| F6 | Me = Pt |

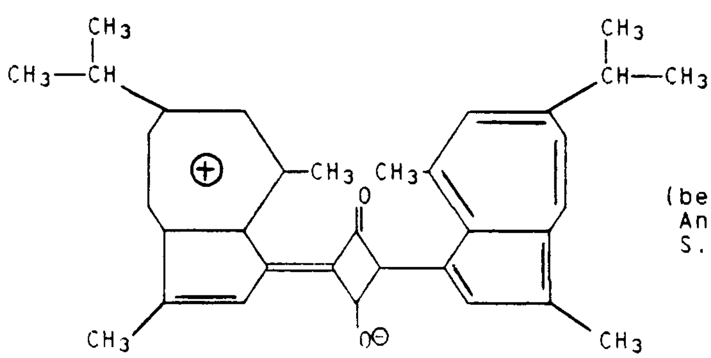

(bekannt aus Angew. Chem. Band 78, S. 937 (1966))

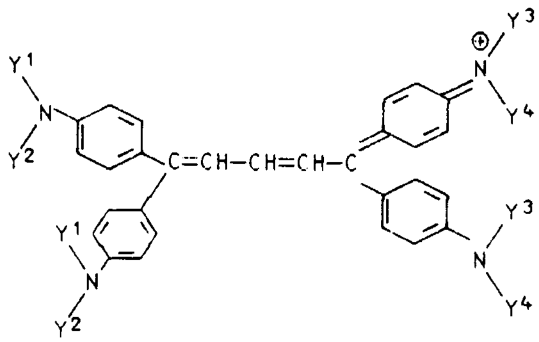

I⊖

(bekannt aus DE-A-3 413 940)

| | $Y^1$ | $Y^2$ | $Y^3$ | $Y^4$ |
|---|---|---|---|---|
| F8 | $C_2H_5$ | $C_2H_5$ | $CH_3$ | $CH_3$ |
| F9 | $C_2H_5$ | $CH_3$ | $C_2H_5$ | $CH_3$ |

Tabelle 3

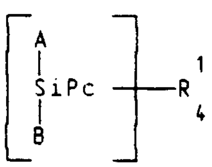

| | $R^1$ | A | B |
|---|---|---|---|
| P1 | H | Cl | Cl |
| P2 | H | F | F |
| P3 | H | $OCH_3$ | $OCH_3$ |
| P4 | 4-t-Butyl | $O-n-C_8H_{17}$ | $n-C_4H_9$ |
| P5 | $4-Si(CH_3)_3$ | $OC_{12}H_{25}$ | $n-C_4H_9$ |
| P6 | $4-C(CH_3)_2-CH_2-C(CH_3)_3$ | $OCH_2-CH-C_4H_9$<br>$C_2H_5$ | $OCH_2-CH-C_4H_9$<br>$C_2H_5$ |
| P7 | H | $O(CH_2)_3-N(CH_3)_2$ | $O(CH_2)_3-N(CH_3)_2$ |
| P8 | H | $OC_2H_4-O-CH_2-C(CH_3)$ | $OC_2H_4-O-CH_2-C(CH_3)_3$ |
| P9 | 4-t-Butyl | $C_4H_9$<br>$OC_2H_4-O-CH_2-CH$<br>$C_2H_5$ | $OC_2H_4-O-CH_2-CH-C_4H_9$<br>$C_2H_5$ |

C) Die obengenannten Schichten konnten in einem Laufwerk mit einem Halbleiterlaser (Wellenlänge 836 nm) durch den transparenten Träger hindurch problemlos fokussiert werden.
Die Schichten konnten empfindlich markiert und mit einem ausgezeichneten Signal : Rausch-Verhältnis ausgelesen werden.

## Patentansprüche

1. Optisches Aufzeichnungsmedium, enthaltend einen transparenten Träger, eine gegenüber Laserlicht empfindliche, Farbstoff enthaltende Schicht sowie eine Reflektorschicht, die ein Silicium-Phthalocyanin-

derivat der Formel I

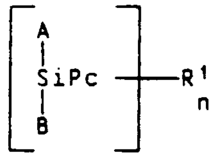

(I)

enthält, in der $R^1$ an den Phthalocyaninrest gebunden ist, und in der

$R^1$ Wasserstoff, $C_1$-$C_{12}$-Alkyl, $C_1$-$C_{12}$-Alkoxy, Halogen oder den Rest

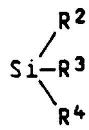

,

in dem $R^2$, $R^3$ und $R^4$ gleich oder verschieden sind und unabhängig voneinander jeweils für $C_1$-$C_5$-Alkyl stehen,

n die Zahl 1, 2, 3 oder 4 und

A und B gleich oder verschieden sind und unabhängig voneinander jeweils $C_1$-$C_{12}$-Alkyl, Halogen oder den Rest $OR^5$ bedeuten, wobei $R^5$ für $C_1$-$C_{12}$-Alkyl, das gegebenenfalls durch ein oder mehrere Sauerstoffatome oder $C_1$-$C_4$-Alkyliminogruppen unterbrochen und/oder durch einen fünf- oder sechsgliedrigen gesättigten heterocyclischen Rest substituiert ist, oder für den Rest

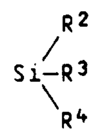

,

in dem $R^2$, $R^3$ und $R^4$ jeweils die obengenannte Bedeutung besitzen, steht.

**2.** Optisches Aufzeichnungsmedium gemäß Anspruch 1, dadurch gekennzeichnet, daß $R^1$ Wasserstoff, $C_2$-$C_6$-Alkyl, $C_1$-$C_8$-Alkoxy, Fluor, Chlor oder Trimethylsilyl, n die Zahl 4 und A und B unabhängig voneinander $C_1$-$C_8$-Alkyl, Fluor, Chlor oder den Rest $OR^5$ bedeuten, wobei $R^5$ für $C_1$-$C_8$-Alkyl, das gegebenenfalls durch ein oder mehrere Sauerstoffatome oder $C_1$-$C_4$-Alkyliminogruppen unterbrochen und/oder durch einen fünf- oder sechsgliedrigen gesättigten heterocyclischen Rest substituiert ist, steht.

**3.** Optisches Aufzeichnungsmedium gemäß Anspruch 1, dadurch gekennzeichnet, daß sich die ein Silicium-Phthalocyaninderivat der Formel I enthaltende Reflektorschicht zwischen dem transparenten Träger und der gegenüber Laserlicht empfindlichen, Farbstoff enthaltenden Schicht befindet.

**4.** Optisches Aufzeichnungsmedium gemäß Anspruch 1, dadurch gekennzeichnet, daß die gegenüber Laserlicht empfindliche, Farbstoff enthaltende Schicht zusätzlich Bindemittel enthält.

## Claims

**1.** An optical recording medium containing a transparent base, a dye-containing layer which is sensitive to laser light and a reflector layer which contains a silicon-phthalocyanine derivative of the formula I

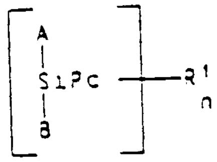

(I)

where $R^1$ is bonded to the phthalocyanine radical and is hydrogen, $C_1$-$C_{12}$-alkyl, $C_1$-$C_{12}$-alkory, halogen or a radical

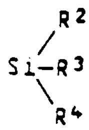

in which $R^2$, $R^3$ and $R^4$ are identical or different and independently of one another are each $C_1$-$C_5$-alkyl, n is 1, 2, 3 or 4 and A and B are identical or different and independently of one another are each $C_1$-$C_{12}$-alkyl, halogen or a radical $OR^5$, in which $R^5$ is $C_1$-$C_{12}$-alkyl which may be interrupted by one or more oxygen atoms or $C_1$-$C_4$-alkylimino groups and/or substituted by a 5-membered or 6-membered saturated heterocyclic radical, or is a radical

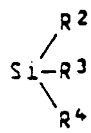

where $R^2$, $R^3$ and $R^4$ each have the above meanings.

2. An optical recording medium as claimed in claim 1, wherein $R^1$ is hydrogen, $C_2$-$C_6$-alkyl, $C_1$-$C_8$-alkoxy, fluorine, chlorine or trimethylsilyl, n is 4 and A and B independently of one another are each $C_1$-$C_8$-alkyl, fluorine, chlorine or a radical $OR^5$ in which $R^5$ is $C_1$-$C_8$-alkyl which may be interrupted by one or more oxygen atoms or $C_1$-$C_4$-alkylimino groups and/or substituted by a 5-membered or 6-membered saturated heterocyclic radical.

3. An optical recording medium as claimed in claim 1, wherein the reflector layer containing a silicon-phthalocyanine derivative of the formula I is located between the transparent base and the dye-containing layer which is sensitive to laser light.

4. An optical recording medium as claimed in claim 1, wherein the dye-containing layer which is sensitive to laser light additionally contains a binder.

**Revendications**

1. Milieu d'enregistrement optique, comprenant un support transparent, une couche sensible à la lumière laser, contenant un colorant, ainsi qu'une couche réfléchissante qui contient un dérivé de silicium-phtalocyanine de formule I

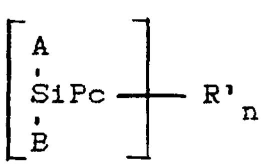

(I)

dans laquelle $R^1$ est fixé au reste phtalocyanine et dans laquelle

$R^1$ représente un atome d'hydrogène, un reste alkyle en $C_1$-$C_{12}$, alcoxy en $C_1$-$C_{12}$, un atome d'halogène ou le reste

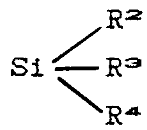

où $R^2$, $R^3$ et $R^4$ sont identiques ou différents et sont mis chacun, indépendamment les uns des autres, pour un reste alkyle en $C_1$-$C_5$,

n représente le nombre 1, 2, 3 ou 4 et

A et B sont identiques ou différents et représentent chacun, indépendamment l'un de l'autre, un reste alkyle en $C_1$-$C_{12}$, un atome d'halogène ou le reste $OR^5$, $R^5$ étant mis pour un reste alkyle en $C_1$-$C_{12}$, qui est éventuellement interrompu par un ou plusieurs atomes d'oxygène ou groupements alkylimino en $C_1$-$C_4$ et/ou est substitué par un reste hétérocyclique saturé penta- ou hexagonal, ou pour le reste

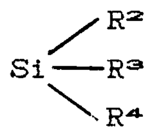

dans lequel $R^2$, $R^3$ et $R^4$ ont chacun la signification susmentionnée.

**2.** Milieu d'enregistrement optique selon la revendication 1, caractérisé en ce que $R^1$ représente un atome d'hydrogène, un reste alkyle en $C_2$-$C_6$, alcoxy en $C_1$-$C_8$, un atome de fluor, de chlore ou le reste triméthylsilyle, n représente le nombre 4, et A et B représentent chacun, indépendamment l'un de l'autre, un reste alkyle en $C_1$-$C_8$, un atome de fluor, de chlore ou le reste $OR^5$, $R^5$ étant mis pour un reste alkyle en $C_1$-$C_8$, qui est éventuellement interrompu par un ou plusieurs atomes d'oxygène ou groupements alkylimino en $C_1$-$C_4$ et/ou est substitué par un reste hétérocyclique saturé penta- ou hexagonal.

**3.** Milieu d'enregistrement optique selon la revendication 1, caractérisé en ce que la couche réfléchissante, contenant un dérivé de silicium-phtalocyanine de formule I, se trouve entre le support transparent et la couche sensible à la lumière laser, contenant un colorant.

**4.** Milieu d'enregistrement optique selon la revendication 1, caractérisé en ce que la couche sensible à la lumière laser, contenant un colorant, contient en plus un liant.